# EUROPÄISCHE PATENTANMELDUNG

(11) **EP 4 660 493 A1**
(43) Veröffentlichungstag der Anmeldung: **10.12.2025**
(21) Anmeldenummer: 25181267.3
(22) Anmeldetag: 06.06.2025
(51) Int. Cl.: F16K 7/12, B66F 3/18, F16K 27/02

(54) **SPANNBAUGRUPPE UND PROZESSVENTIL**

(30) Priorität: 06.06.2024 DE 102024115821
(71) Anmelder: GEMÜ Gebr. Müller Apparatebau GmbH & Co. Kommanditgesellschaft, 74653 Ingelfingen (DE)
(72) Erfinder: Klaus, Frankenbach, 74670 Forchtenberg (DE); Matter, Simon, 74747 Ravenstein (DE); Sendner, Kai, 01773 Altenberg (DE)
(74) Vertreter: DREISS Patentanwälte PartG mbB

(57) **Zusammenfassung**

Es wird eine Spannbaugruppe (100) für ein Prozessventil (2) vorgeschlagen. Diese umfasst: ein Gehäuse (102) mit einer Schnittstelle (104a-b) zur Verbindung mit einem Ventilkörper (200); ein sich am Gehäuse (102) abstützendes Getriebe (106), wobei das Getriebe (106) eine im Gehäuse (102) rotierbar gelagerte Schneckenwelle (110) umfasst, wobei das Getriebe (106) einen um eine Stellachse (S) rotierbar im Gehäuse (102) gelagerten Spanneinsatz (120) umfasst, dessen Schneckenradzähne (122) in Eingriff mit der Schneckenwelle (110) stehen, und wobei ein Außengewinde (124) des rotierbaren Spanneinsatzes (120) in Eingriff mit einem Innengewinde (108) des Gehäuses (102) steht, um durch die Rotation des Spanneinsatzes (120) diesen axial entlang der Stellachse (S) und relativ zu dem Gehäuse (102) zu bewegen; und ein am Abtrieb des Getriebes (106) angeordnetes Spannelement (130), wobei das Spannelement (130) eine Anpressfläche (132) umfasst, welche zum Verspannen eines lateralen Außenbundes (332) einer Ventilmembran (300) des Prozessventils (2) zwischen dem Spannelement (130) und dem Ventilkörper (200) ausgebildet ist.

## Beschreibung

Die Erfindung betrifft eine Spannbaugruppe für ein Prozessventil sowie ein Prozessventil.

Das Verspannen von Ventilmembranen stellt bei Membranventilen die Dichtheit nach außen sicher.

Die Probleme des Standes der Technik werden durch eine Spannbaugruppe gemäß dem Anspruch 1 und ein Prozessventil gemäß einem nebengeordneten Anspruch gelöst.

Ein erster Aspekt der Beschreibung betrifft eine Spannbaugruppe für ein Prozessventil insbesondere ein Membranventil, wobei die Spannbaugruppe umfasst: ein Gehäuse mit einer Schnittstelle zur Verbindung mit einem Ventilkörper; ein sich am Gehäuse abstützendes Getriebe, wobei das Getriebe eine im Gehäuse rotierbar gelagerte Schneckenwelle umfasst, wobei das Getriebe einen um eine Stellachse rotierbar im Gehäuse gelagerten Spanneinsatz umfasst, dessen Schneckenradzähne in Eingriff mit der Schneckenwelle stehen, und wobei ein Außengewinde des rotierbaren Spanneinsatzes in Eingriff mit einem Innengewinde des Gehäuses steht, um durch die Rotation des Spanneinsatzes diesen axial entlang der Stellachse und relativ zu dem Gehäuse zu bewegen; und ein am Abtrieb des Getriebes angeordnetes Spannelement, wobei das Spannelement eine Anpressfläche umfasst, welche zum Verspannen eines lateralen Außenbundes einer Ventilmembran des Prozessventils zwischen dem Spannelement und dem Ventilkörper ausgebildet ist.

Vorteilhaft lässt sich über den vorgeschlagenen Schneckentrieb und den im Gehäuse axial beweglichen Spanneinsatz die Ventilmembran einfach verspannen. Es ist hierzu vorteilhaft nur eine geringe Betätigungskraft erforderlich.

Ein vorteilhaftes Beispiel zeichnet sich dadurch aus, dass eine zylindrische Antriebs-Befestigungshülse zur starren Festlegung eines Ventilantriebs zu dem Ventilkörper sich von einer dem Ventilantrieb zugewandten Seite der Spannbaugruppe ausgehend in die Spannbaugruppe hinein erstreckt, wobei die zylindrische Antriebs-Befestigungshülse eine entlang der Stellachse verlaufende Durchgangsöffnung zur Aufnahme der Antriebsstange des Ventilantriebs umfasst.

Vorteilhaft ist so die Antriebsstange zumindest abschnittsweise innerhalb der Antriebs-Befestigungshülse angeordnet. Zudem kann eine axiale Führung der Antriebsstange durch die Antriebs-Befestigungshülse erfolgen.

Ein vorteilhaftes Beispiel zeichnet sich dadurch aus, dass der Spanneinsatz einen Außenbund der Antriebs-Befestigungshülse bei einer Bewegung entlang der Stellachse in Richtung des Ventilkörpers mitnimmt.

Damit wird die starre Festlegung des Ventilantriebs mittels des Spanneinsatzes erreicht.

Ein vorteilhaftes Beispiel zeichnet sich dadurch aus, dass ein Außenbund der Antriebs-Befestigungshülse zumindest abschnittsweise zwischen dem Spanneinsatz und dem Spannelement angeordnet ist.

Dadurch wird der Ort der Verbindung zwischen Ventilkörper und Ventilantrieb in Richtung Ventilkörper verlagert. Das ist deshalb vorteilhaft, da der Kraftweg zwischen Zugbeanspruchung des Gehäuses der Spannbaugruppe und der Druckbeanspruchung der Antriebs-Befestigungshülse und des Spannelements verkürzt wird, was der verbesserten Dauerfestigkeit der Verbindung während des Betriebs des Prozessventils dient.

Ein vorteilhaftes Beispiel zeichnet sich dadurch aus, dass ein Drehmomentübertragungsabschnitt der Schneckenwelle von außerhalb der Spannbaugruppe zugänglich ist.

Damit kann ein Monteur durch ein angetriebenes oder nicht angetriebenes Handwerkzeug die Montage und Demontage des Prozessventils zum Membrantausch durchführen. Die Demontage und Montage werden durch den zugänglichen einen einzigen Drehmomentübertragungsabschnitt vereinfacht.

Ein vorteilhaftes Beispiel zeichnet sich dadurch aus, dass sich zwischen dem Drehmomentübertragungsabschnitt der Schneckenwelle und einem in Eingriff mit den Schneckenradzähnen des Spanneinsatzes stehenden Schneckenflankenabschnitt der Schneckenwelle eine Soll-Bruchstelle angeordnet ist.

Bei überhöhtem Drehmoment bricht die Soll-Bruchstelle und verhindert eine Zerstörung des Getriebes, der Ventilmembran oder anderer Komponenten des Prozessventils.

Ein vorteilhaftes Beispiel zeichnet sich dadurch aus, dass sich zwischen dem Drehmomentübertragungsabschnitt der Schneckenwelle und dem in Eingriff mit den Schneckenradzähnen des Spanneinsatzes stehenden Schneckenflankenabschnitt der Schneckenwelle eine Sicherheitskupplung angeordnet ist.

Durch die Sicherheitskupplung wird das Einbringen eines überhöhten Drehmoments wirksam verhindert, da dieser beim Überschreiten eines Drehmomentschwellwerts öffnet und die Drehmomentübertragung unterbricht. So wird einer Beschädigung der Spannbaugruppe wirksam vorgebeugt.

Ein vorteilhaftes Beispiel zeichnet sich dadurch aus, dass die Schneckenwelle zumindest im Eingriffsbereich mit dem Spanneinsatz aus einer Metalllegierung und der Spanneinsatz zumindest im Eingriffsbereich mit der Schneckenwelle aus einem Kunststoff gefertigt sind, oder der Spanneinsatz zumindest im Eingriffsbereich mit der Schneckenwelle aus einer Metalllegierung und die Schneckenwelle zumindest im Eingriffsbereich mit dem Spanneinsatz aus einem Kunststoff gefertigt sind.

Vorteilhaft verringert sich dadurch das in die Schneckenwelle einzubringende Drehmoment, welche zu einer Axialbewegung des Spanneinsatzes bzw. zum Einbringen der Spannkraft notwendig ist.

Ein vorteilhaftes Beispiel zeichnet sich dadurch aus, dass die Schneckenradzähne des Spanneinsatzes aus dem Kunststoff gefertigt sind, wobei das Außengewinde des Spanneinsatzes aus der Metalllegierung oder einer anderen Metalllegierung gefertigt ist.

Dieser Hybrid-Spanneinsatz ermöglicht die Reduzierung des in die Schneckenwelle einzubringenden Drehmoments, das für die Verspannung der Ventilmembran notwendig ist.

Ein vorteilhaftes Beispiel zeichnet sich dadurch aus, dass ein Schneckentrieb umfassend den Spanneinsatz und die Schneckenwelle selbsthemmend ausgeführt ist.

Vorteilhaft wird dadurch eine unbeabsichtigte Entspannung des Außenbundes der Ventilmembran wirksam verhindert.

Ein vorteilhaftes Beispiel zeichnet sich dadurch aus, dass das Außengewinde des Spanneinsatzes und das eingreifende Innengewinde des Gehäuses selbsthemmend ausgeführt sind.

Vorteilhaft wird dadurch nicht nur eine unbeabsichtigte Entspannung des Außenbundes der Ventilmembran wirksam verhindert. Vielmehr wird über das Trapezgewinde auch der Ventilantrieb zum Ventilkörper starr festgelegt.

Ein vorteilhaftes Beispiel zeichnet sich dadurch aus, dass der Spanneinsatz und die Schneckenwelle dazu eingerichtet sind, eine Rotationsbewegung des Spanneinsatzes aufgrund des Eingriffs mit der rotierenden Schneckenwelle zu vollführen, wobei der Spanneinsatz und das Gehäuse dazu eingerichtet sind, durch die Rotationsbewegung des Spanneinsatzes und den Eingriff des Außengewindes des Spanneinsatzes in das Innengewinde des Gehäuses eine Axialbewegung relativ zum Gehäuse entlang der Stellachse zu vollführen.

Ein weiterer Aspekt der Beschreibung betrifft ein Prozessventil umfassend einen Ventilantrieb; einen Ventilkörper; und die Spannbaugruppe gemäß dem ersten Aspekt, wobei die Spannbaugruppe zwischen dem Ventilantrieb und dem Ventilkörper angeordnet ist.

Ein vorteilhaftes Beispiel zeichnet sich dadurch aus, dass eine axiale Bewegung des Spanneinsatzes in Richtung des Ventilkörpers das Gehäuse der Spannbaugruppe und den Ventilantrieb starr mit dem Ventilkörper verbindet, indem der Spanneinsatz über das Gehäuse eine Zugkraft auf den Ventilkörper ausübt und der Spanneinsatz über das Spannelement eine Druckkraft auf die Antriebs-Befestigungshülse und den Ventilkörper bewirkt.

In der Zeichnung zeigen:
- Fig. 1: ein Prozessventil in einem Schnitt entlang einer Stellachse;
- Fig. 2: das Prozessventil aus Figur 1 in einem Schnitt lotrecht zur Stellachse;
- Fig. 3: das Prozessventil in einem anderen Schnitt entlang der Stellachse;
- Fig. 4: einen Spanneinsatz in perspektivischer Darstellung;
- Fig. 5: den Spannsatz in einer Schnittdarstellung;
- Fig. 6: ein Beispiel einer Schneckenwelle in einer Schnittdarstellung;
- Fig. 7: ein weiteres Beispiel der Schneckenwelle in einer Schnittdarstellung; und
- Fig. 8: ein anderes Beispiel der Schneckenwelle in einer Schnittdarstellung.

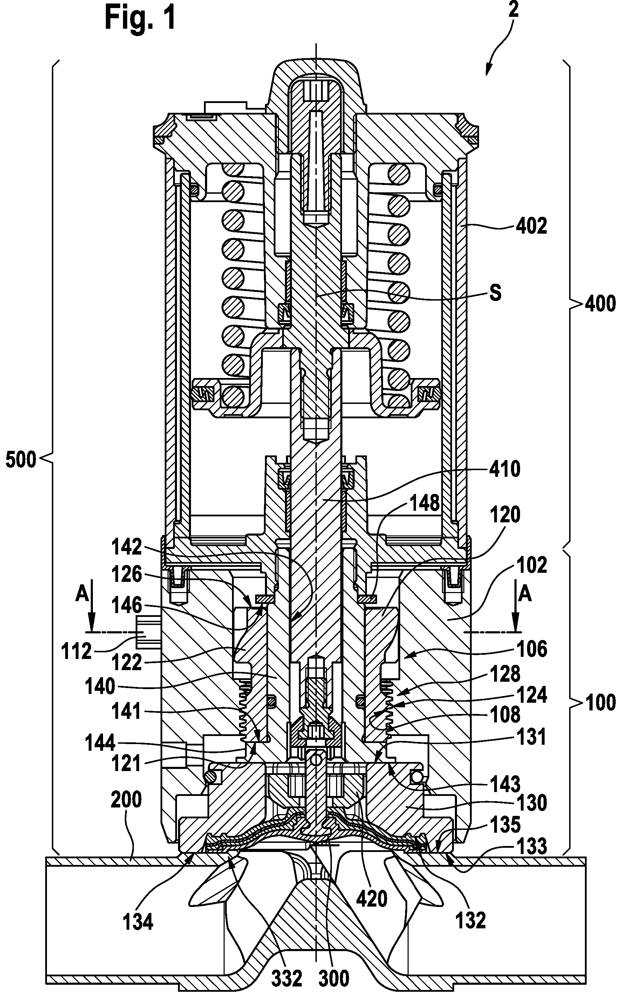

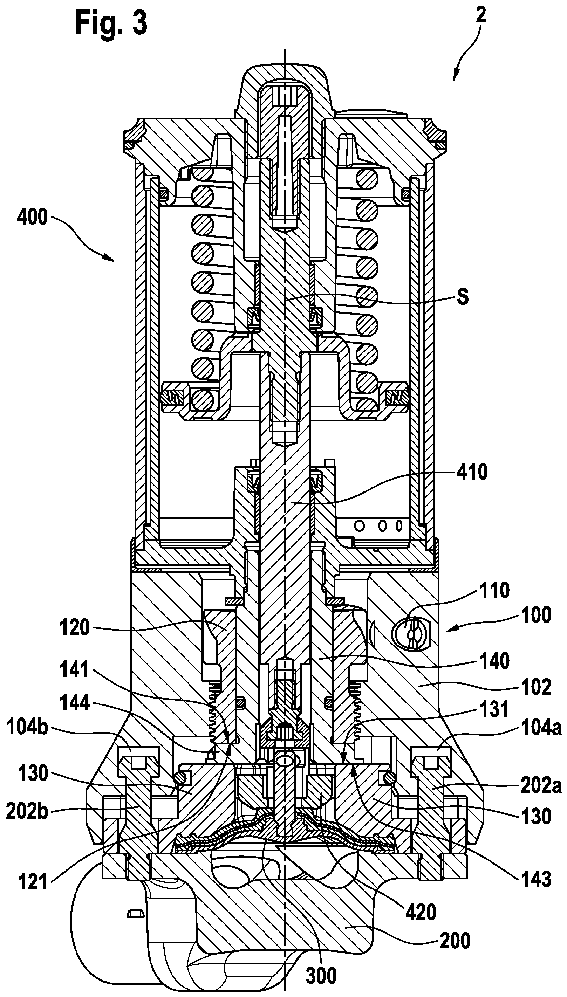

Figuren 1 und 3 zeigen ein Prozessventil 2, insbesondere ein Membranventil, in einem jeweiligen schematischen Schnitt, in dem eine Stellachse S des Prozessventils 2 liegt. Das Prozessventil 2 umfasst einen Ventilantrieb 400, einen Ventilkörper 200 und eine Spannbaugruppe 100, die zwischen dem Ventilantrieb 400 und dem Ventilkörper 200 angeordnet ist.

Die Spannbaugruppe 100 umfasst ein Gehäuse 102 mit einer Schnittstelle 104a-b zur Verbindung mit dem Ventilkörper 200.

An dem Gehäuse 102 stützt sich ein Getriebe 106 der Spannbaugruppe 100 ab. Das Getriebe 106 umfasst eine im Gehäuse 102 rotierbar gelagerte Schneckenwelle 110. Das Getriebe 106 umfasst einen um die Stellachse S rotierbar im Gehäuse 102 gelagerten Spanneinsatz 120, dessen Schneckenradzähne 122 in Eingriff mit der Schneckenwelle 110 stehen. Ein Außengewinde 124 des rotierbaren Spanneinsatzes 120 steht in Eingriff mit einem Innengewinde 108 des Gehäuses 102, um durch die Rotation des Spanneinsatzes 120 den Spanneinsatz 120 axial entlang der Stellachse S und relativ zu dem Gehäuse 102 zu bewegen.

Ein am Abtrieb des Getriebes 106 angeordnetes Spannelement 130 umfasst eine Anpressfläche 132, welche zum Verspannen eines lateralen Außenbundes 332 einer Ventilmembran 300 des Prozessventils 2 zwischen dem Spannelement 130 und dem Ventilkörper 200 ausgebildet ist.

Es ist im Beispiel vorgesehen, dass der Spanneinsatz 120 und die Schneckenwelle 110 dazu eingerichtet sind, eine Rotationsbewegung des Spanneinsatzes 120 aufgrund des Eingriffs mit der rotierenden Schneckenwelle 110 zu vollführen, und wobei der Spanneinsatz 120 und das Gehäuse 102 dazu eingerichtet sind, durch die Rotationsbewegung des Spanneinsatzes 120 und den Eingriff des Außengewindes 124 des Spanneinsatzes 120 in das Innengewinde 108 des Gehäuses 102 eine Axialbewegung relativ zum Gehäuse 102 entlang der Stellachse S zu vollführen.

Eine Rotationsachse N der Schneckenwelle 110 verläuft in einer Lotebene der Stellachse.

Der Schneckentrieb 116, welcher durch die Verbindung der Schneckenwelle 110 und des Spanneinsatzes 120 bereitgestellt wird, das Gewindepaar, welches durch das Gewinde 108 des Gehäuses 102 und das Gewinde 124 des Spanneinsatzes 120 bereitgestellt wird, die Abspannung des Gehäuses 102 am Ventilkörper 200, und das Spannelement 130 sind derart konfiguriert, dass eine axiale Bewegung des Spanneinsatzes 120 eine Verspannkraft zwischen dem Außenbund 332 der Ventilmembran 300 und dem Ventilkörper 200 erzeugt wird, wodurch das Prozessventil 2 nach außen hin abgedichtet ist.

Der Schneckentrieb 116, welcher durch die Verbindung der Schneckenwelle 110 und des Spanneinsatzes 120 bereitgestellt wird, das Gewindepaar, welches durch das Gewinde 108 des Gehäuses 102 und das Gewinde 124 des Spanneinsatzes 120 bereitgestellt wird, , die Abspannung des Gehäuses 102 am Ventilkörper 200, und das Spannelement 130 sind derart konfiguriert, dass eine axiale Bewegung des Spanneinsatzes 120 eine Verspannkraft zwischen einer Verspannfläche 133 und einer Gegenverspannfläche 135 des Ventilkörpers 200 erzeugt wird, wodurch das Gehäuse 102 der Spannbaugruppe 100 und der Ventilkörper 200 starr zueinander festgelegt werden.

Das Spannelement 130 ist zwischen dem Außenbund 144 der Antriebs-Befestigungshülse 140 und dem Ventilkörper 200 angeordnet.

Das Spannelement 130 befindet sich zwischen dem Spanneinsatz 120 und dem Ventilkörper 200. Das Spannelement 130 ist auch als ventilkörper-seitiges Spannelement 130 bezeichenbar.

Ein Schneckentrieb 116 umfassend den Spanneinsatz 120 und die Schneckenwelle 110 ist selbsthemmend ausgeführt. Der Schneckentrieb 116 ist selbsthemmend, da der Eingriffswinkel zwischen der Schneckenwelle 110 und der Spanneinsatz 120 so gewählt ist, dass er die Selbsthemmungseigenschaften des Schneckentriebs 116 verstärkt.

Das Außengewinde 124 des Spanneinsatzes 120 und das eingreifende Innengewinde 108 des Gehäuses 102 ist selbsthemmend ausgeführt, um die eingestellte Spannung auf den Außenbund 332 der Ventilmembran 300 zu halten, ohne dass eine zusätzliche Kraft in das Getriebe 106 eingebracht wird.

Insbesondere sind das Außengewinde 124 und das Innengewinde 108 als jeweiliges Trapezgewinde ausgeführt.

Das Außengewinde 124 des Spanneinsatzes 120 hat einen oder eine Mehrzahl von Gewindegängen, wobei jeder Gewindegang eine trapezförmige Querschnittsform besitzt, die durch eine erste und eine zweite Flanke definiert ist, wobei die erste Flanke einen ersten Winkel zur axialen Richtung der Schraubenspindel bildet und die zweite Flanke einen zweiten, steileren Winkel zur axialen Richtung des Spanneinsatzes 120 bildet.

Das Innengewinde 108 des Gehäuses 102 ist zum Eingreifen in das Außengewinde 124 des Spanneinsatzes 120 ausgebildet ist, wobei das Innengewinde 108 ebenfalls einen oder eine Mehrzahl von Gewindegängen mit einer trapezförmigen Querschnittsform aufweist, die der Querschnittsform der Gewindegänge des Spanneinsatzes 120 entspricht.

Der erste Winkel und der zweite Winkel sind so ausgebildet, dass sie eine Selbsthemmung des Spanneinsatzes 120 in dem Gehäuse 102 bewirken, indem sie das Verdrehen des Spanneinsatzes 120 ohne externe Krafteinwirkung verhindern.

In Bezug zur Stellachse S umfasst das Spannelement 130 radial außerhalb der Anpressfläche 132 eine Kontaktfläche 134 zur Kontaktierung einer Oberfläche des Ventilkörpers 200. Die Kontaktfläche 134 und die Anpressfläche 132 sind lotrecht zur Stellachse S voneinander beabstandet. Dieser Abstand bestimmt gemeinsam mit der Ausprägung des Außenbundes 332 die Verpressung des lateralen Außenbundes 332 der Ventilmembran 300.

Das Spannelement 130 ist dazu vorgesehen, die von dem Spanneinsatz 120 erzeugte Druckkraft in Richtung des Ventilkörpers 200 abzuleiten. Zudem weist das Spannelement 130 eine um die Stellachse S ausgeführte Durchgangsöffnung auf, um Antriebselemente des Prozessventils aufzunehmen. Die ausgehend vom Spanneinsatz 120 über eine bezüglich der Stellachse S radial innenliegend Kraftübertragungsfläche 131 eingebrachte Druckkraft wird zum einen in den Außenbund 332 der Ventilmembran 300 und zum anderen über die Kontaktfläche 134 direkt in den Ventilkörper 200 eingeleitet.

In einem nicht gezeigten Beispiel ragt die Ventilmembran 300 ausgehend von dem verspannten Außenbund der Ventilmembran 300 in einen Raum hinein, der zumindest abschnittweise von dem Ventilkörper 200 und von dem Spannelement 130 begrenzt wird. In diesem Raum ist die Ventilmembran 300 nicht verspannt. Dieser von dem verspannten Außenbund der Ventilmembran 300 abragende Abschnitt der Ventilmembran 300 kann auch als Membranlasche bezeichnet werden.

In einem weiteren nicht gezeigten Beispiel ist die Ventilmembran 300 zwischen dem Gehäuse 102 bzw. dem Ventilantrieb 400 und dem Ventilkörper 200 verspannt.

Das Spannelement 130 wird mittels des Spanneinsatzes 120 im gezeigten Beispiel zwischen der Antriebs-Befestigungshülse 140 und dem Ventilkörper 200 verspannt.

Es ist vorgesehen, dass eine zylindrische Antriebs-Befestigungshülse 140 zur starren Festlegung eines Ventilantriebs 400 zu dem Ventilkörper 200 sich von einer dem Ventilantrieb 400 zugewandten Seite der Spannbaugruppe 100 ausgehend in die Spannbaugruppe 100 hinein erstreckt, wobei die zylindrische Antriebs-Befestigungshülse 140 eine entlang der Stellachse S verlaufende Durchgangsöffnung 142 zur Aufnahme einer Antriebsstange 410 des Ventilantriebs 400 umfasst.

Durch das Drehen der Schneckenwelle 110 wird bewirkt, dass der Spanneinsatz 120 einen Außenbund 144 der Antriebs-Befestigungshülse 140 bei einer Bewegung entlang der Stellachse S in Richtung des Ventilkörpers 200 mitnimmt.

Des Weiteren ist vorgesehen, dass ein Außenbund 144 der Antriebs-Befestigungshülse 140 zumindest abschnittsweise zwischen dem Spanneinsatz 120 und dem Spannelement 130 angeordnet ist.

Ein Antriebsgehäuse 402 des Ventilantriebs 400 ist starr mit der Antriebs-Befestigungshülse 140 verbunden ist, wobei die Antriebsstange 410 des Ventilantriebs 400 in der Durchgangsöffnung 142 der Antriebs-Befestigungshülse 140 axial beweglich angeordnet ist.

Ein Druckstück 420 ist im Betrieb des Prozessventils 2 mit der Antriebsstange 410 verbunden. Das Drückstück 420 wird axial in dem wenigstens einen Spannelement 130 verdrehsicher, d.h. im Wesentlichen nicht um die Stellachse S rotierbar, entlang der Stellachse S axial geführt. Das Druckstück 420 drückt zum Verschließen des Ventils die Ventilmembran 300 auf den Ventilsitz.

Eine axiale Bewegung des Spanneinsatzes 120 in Richtung des Ventilkörpers 200 verbindet das Gehäuse 102 der Spannbaugruppe 100 und den Ventilantrieb 400 starr mit dem Ventilkörper 200, indem der Spanneinsatz 120 über das Gehäuse 102 eine Zugkraft auf den Ventilkörper 200 ausübt und der Spanneinsatz 120 über das Spannelement 130 eine Druckkraft auf die Antriebs-Befestigungshülse 140 und den Ventilkörper 200 bewirkt.

Mehrere von dem Ventilkörper 200 abragende Spannbolzen 202a-b, gezeigt in der Figur 3, greifen mit einem jeweiligen Kopf in korrespondierende Bajonettbahnen gemäß der Schnittstelle 104a-b des Gehäuses 102 der Spannbaugruppe 100 ein, wobei die Bajonettbahnen gemäß der Schnittstelle 104a-b so gestaltet sind, dass sie eine formschlüssige Verbindung durch relative Rotation zwischen dem Gehäuse 102 der Spannbaugruppe 100 und dem Ventilkörper 200 ermöglichen.

Unter Vorliegen der formschlüssigen Verbindung zwischen dem Gehäuse 102 der Spannbaugruppe 100 und dem Ventilkörper 200 ist der sich am Gehäuse 102 der Spannbaugruppe 100 abstützende Spanneinsatz 120 axial in Richtung Ventilkörper 200 bewegbar, wobei der Spanneinsatz 120 bei dieser Bewegung auf das Spannelement 130 drückt, um den lateralen Außenbund 332 der Ventilmembran 300 gegen den Ventilkörper 200 zu pressen.

In anderen Worten: Eine durch den sich am Gehäuse 102 der Spannbaugruppe 100 abstützenden Spanneinsatz 120 aufgebrachte Spannkraft wird über das Spannelement 130 zum Ventilkörper 200 übertragen und die formschlüssige Verbindung der Bajonettbahnen gemäß der Schnittstelle 104a-b bewirkt eine Kraftübertragung von den Spannbolzen 202ab zum Gehäuse 102 der Spannbaugruppe 100, sodass das Gehäuse 102 der Spannbaugruppe 100, insbesondere auch der Ventilantrieb 400 durch die kombinierte Wirkung der axialen Spannkraft des Spanneinsatzes 120 und der Abspannung des Gehäuses 102 der Spannbaugruppe 100 durch das Eingreifen in die Spannbolzen 202a-b des Ventilkörpers 200 starr zum Ventilkörper 200 festgelegt wird.

Die Antriebs-Befestigungshülse 140 ist starr mit dem Ventilantrieb 400 verbunden. Das Gehäuse 102 und der Ventilantrieb 400 sind in der gezeigten Anordnung relativ zueinander rotierbar. In einem weiteren Beispiel sind das Gehäuse 102 und der Ventilantrieb 400 durch ineinandergreifende Konturen nicht relativ zueinander rotierbar.

Der rotierbare Spanneinsatz 120 weist eine ventilkörperseitige Kraftübertragungsfläche 121 auf, welche an einer die Kraftübertragungsfläche 141 der Antriebs-Befestigungshülse 140 anliegt, um die Druckkraft über die Antriebs-Befestigungshülse 140 an das Spannelement 130 weiterzuleiten.

In einem nicht gezeigten Beispiel ist zwischen den Kraftübertragungsflächen 121 und 141 ein Lager angeordnet, das die Reibungsverluste gegenüber direkt aneinander anliegenden Flächen reduziert.

Eine Kraftübertragungsfläche 143 der Antriebs-Befestigungshülse 140 drückt zur Verspannung des Außenbundes 332 der Ventilmembran 300 die Kraftübertragungsfläche 131 der Spannelements 130.

Das Spannelement 130 ist relativ zum Gehäuse 102 der Spannbaugruppe 100 nicht rotierbar, um das Einbringen von rotatorisch bedingten Scherkräften in die Ventilmembran 300 zu verhindern. Beispielsweise greift hierzu ein Vorsprung des Spannelements 130 in eine parallel zur Stellachse S in das Gehäuse eingebrachte Nut ein.

In einem nicht gezeigten Beispiel ist die Antriebs-Befestigungshülse 140 entweder nicht vorhanden oder greift an einer anderen Stelle an den Spanneinsatz 120 an. Alternativ zum Vorsehen der Antriebs-Befestigungshülse 140 kann beispielsweise vorgesehen sein, dass der Ventilantrieb auf andere Art und Weise, beispielsweise durch eine Verschraubung oder andersartige Befestigung zur Spannbaugruppe 100 festgelegt wird.

Eine zur Antriebs-Befestigungshülse 140 feststehender Anschlagsfläche 146 bildet einen Anschlag für eine vom Ventilkörper 200 abgewandte Anschlagfläche 128 des Spanneinsatzes 120.

Die Anschlagsfläche 146 wird von einem zwischen dem Antriebsgehäuse 402 und der Antriebs-Befestigungshülse 140 festgelegten Ring 148 bereitgestellt.

Die axiale Bewegung des Spanneinsatzes 120 der Spannbaugruppe 100 in Richtung des Ventilkörpers 200, also in eine Verspannrichtung, verbindet das Gehäuse 102 der Spannbaugruppe 100 und den Ventilantrieb 400 starr mit dem Ventilkörper 200, indem der sich am Gehäuse 102 der Spannbaugruppe 100 abstützende Spanneinsatz 120 über das Gehäuse 102 und eine Verbindung des Gehäuses 102 mit dem Ventilkörper 200 eine Zugkraft auf den Ventilkörper 200 bewirkt und der sich am Gehäuse 102 abstützende Spanneinsatz 120 über das Spannelement 130 eine Druckkraft auf den Außenbund 332 der Ventilmembran 300 bewirkt.

Die axiale Bewegung des Spanneinsatzes 120 der Spannbaugruppe 100 in Richtung des Ventilkörpers 200, also in die Verspannrichtung, verbindet das Gehäuse 102 der Spannbaugruppe 100 und den Ventilantrieb 400 starr mit dem Ventilkörper 200, indem der sich am Gehäuse 102 der Spannbaugruppe 100 abstützende Spanneinsatz 120 über das Gehäuse 102 und eine Verbindung des Gehäuses 102 mit dem Ventilkörper 200 eine Zugkraft auf den Ventilkörper 200 bewirkt und der sich am Gehäuse 102 abstützende Spanneinsatz 120 über das Spannelement 130 eine Druckkraft auf die starr mit dem Ventilantrieb 400 verbundene Antriebs-Befestigungshülse 140 und den Ventilkörper 200 bewirkt.

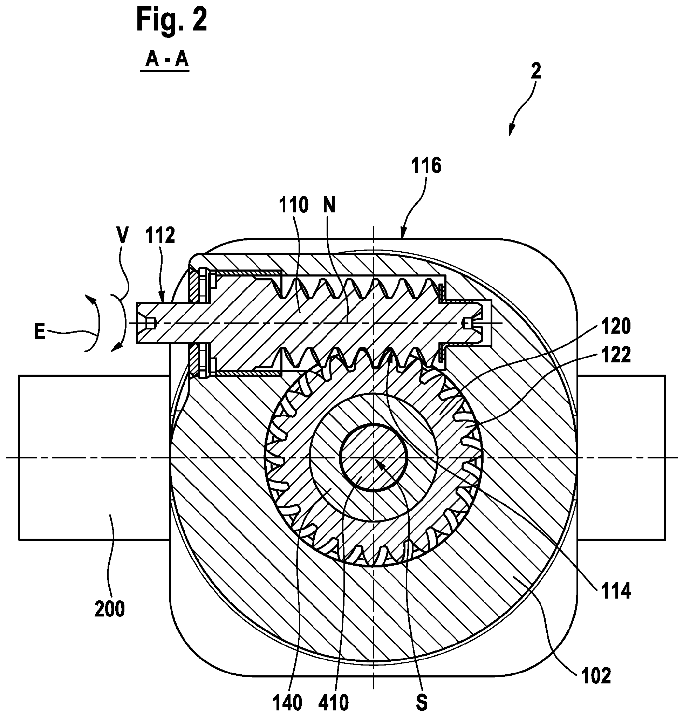

Figur 2 zeigt das Prozessventil 2 in einem Schnitt lotrecht zur Stellachse S. Ein Drehmomentübertragungsabschnitt 112 der Schneckenwelle 110 ist von außerhalb der Spannbaugruppe 100 zugänglich.

Der Spanneinsatz 120 ist zumindest in dem in Figur 2 gezeigten zur Stellachse S lotrechten Schnitt zwischen der Antriebs-Befestigungshülse 140 und dem Gehäuse 102 angeordnet.

Der Spanneinsatz 120 ist um die Stellachse S drehbar an der Antriebs-Befestigungshülse 140 gelagert.

Die Antriebs-Befestigungshülse 140 ist zumindest in dem in Figur 2 gezeigten zur Stellachse S lotrechten Schnitt zwischen der Antriebsstange 410 und dem Spanneinsatz 120 angeordnet.

Die Antriebsstange 410 ist in der Antriebs-Befestigungshülse 140 beweglich entlang der Stellachse S gelagert.

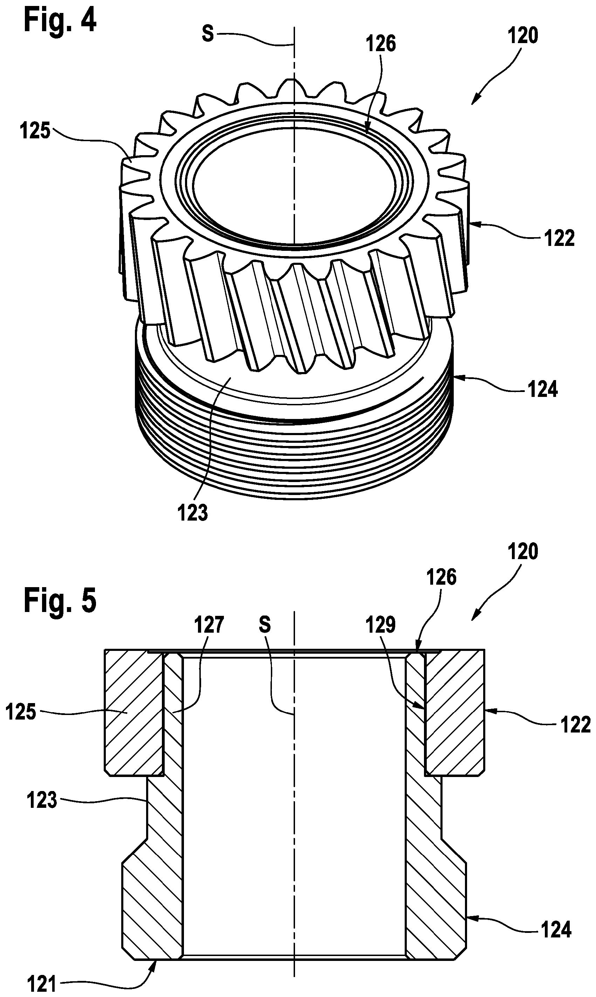

Figuren 4 und 5 zeigen ein Beispiel des Spanneinsatzes 120 umfassend einen ersten Abschnitt 123 und einen zweiten Abschnitt 125. Der erste Abschnitt 123 stellt das beispielsweise als Trapezgewinde ausgebildete Außengewinde 124 und einen Verbindungsbereich 127 zur Verbindung mit dem zweiten Abschnitt 125 bereit. Der zweite Abschnitt 125 stellt die Schneckenradzähne 122 bereit und ist mit seiner Durchgangsöffnung 129 kraftschlüssig mit dem Verbindungsbereich 127 verbunden. Der zweite Abschnitt 125 ist auf den ersten Abschnitt 125 aufgepresst.

Es ist beispielsweise vorgesehen, dass die Schneckenwelle 110 zumindest im Eingriffsbereich mit dem Spanneinsatz 120 aus einer Metalllegierung und der Spanneinsatz 120 zumindest im Eingriffsbereich mit der Schneckenwelle 110 aus einem Kunststoff gefertigt sind

Im dem gezeigten Beispiel ist vorgesehen, dass die Schneckenradzähne 122 des Spanneinsatzes 120 aus dem Kunststoff gefertigt sind, wobei das Außengewinde 124 des Spanneinsatzes 120 aus einer Metalllegierung wie beispielsweise Edelstahl oder einer anderen Metalllegierung gefertigt ist.

In einem nicht gezeigten Beispiel sind der Spanneinsatz 120 zumindest im Eingriffsbereich mit der Schneckenwelle 110 aus einer Metalllegierung und die Schneckenwelle 110 zumindest im Eingriffsbereich mit dem Spanneinsatz 120 aus einem Kunststoff gefertigt.

Der Kunststoff umfasst beispielsweise wenigstens einen der folgenden Kunststoffe: Polyamid (PA), Polyoxymethylen (POM), Polyetheretherketon (PEEK), ein Flourkunststoff wie beispielsweise Polytetrafluorethylen (PTFE), ein Polyimid wie beispielsweise Polyetherimid (PEI), ein Sulfidpolymere wie beispielsweise Polyphenylensulfid (PPS).

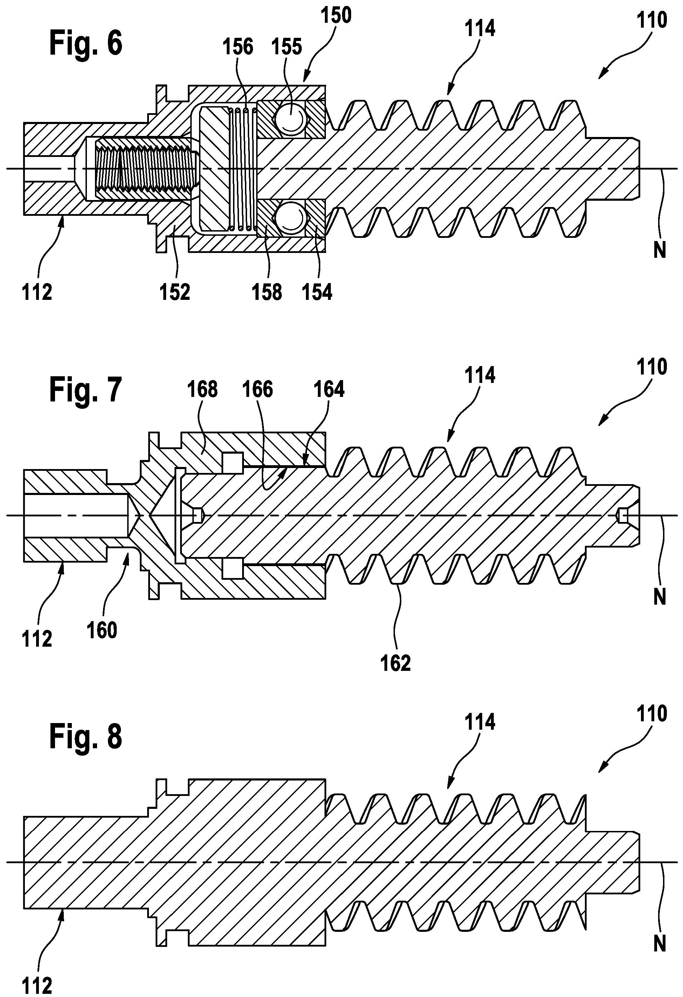

In dem in Figur 6 gezeigten Beispiel der Schneckenwelle 110 ist vorgesehen, dass sich zwischen dem Drehmomentübertragungsabschnitt 112 der Schneckenwelle 110 und dem in Eingriff mit den Schneckenradzähnen 122 des Spanneinsatzes 120 stehenden Schneckenflankenabschnitt 114 der Schneckenwelle 110 eine Sicherheitskupplung 150 angeordnet ist, die auch als Rutschkupplung bezeichenbar ist.

Die Sicherheitskupplung 150 dient zur Übertragung eines Drehmoments zwischen einem Drehmomentübertragungsabschnitt 112 und einem Schneckenflankenabschnitt 114. Die Sicherheitskupplung 150 umfasst eine erste Kupplungskomponente 152, die fest mit dem Drehmomentübertragungsabschnitt 112 verbunden ist, und eine zweite Kupplungskomponente 154, die fest mit dem Schneckenflankenabschnitt 114 verbunden ist. Die erste und zweite Kupplungskomponente 152, 154 sind relativ zueinander beweglich angeordnet.

Die Sicherheitskupplung 150 umfasst weiterhin eine Federanordnung 156, die dazu konfiguriert ist, eine Vorspannkraft zwischen der ersten Kupplungskomponente 152 und der zweiten Kupplungskomponente 154 zu erzeugen, wodurch eine spielfreie Drehmomentübertragung ermöglicht wird. Diese Übertragung erfolgt mittels mehrerer Kugeln 155, die an einer Stirnfläche der ersten Kupplungskomponente 152 in Senkungen angeordnet sind und durch einen federkraftbelasteten Schaltring 158 von der Federanordnung 156 in die Senkungen gedrückt werden.

Im Falle einer Überlast, wenn das über die Sicherheitskupplung 150 übertragene Drehmoment ein voreingestelltes Ausrückmoment überschreitet, ermöglicht die konische Form der Senkungen das Herausheben der Kugeln gegen die Anpresskraft der Federanordnung 156. Dies führt dazu, dass An- und Abtriebsseite drehmomentfrei getrennt werden.

Die Sicherheitskupplung 150 umfasst also eine Freilaufeinrichtung, die die Federanordnung 156, den Schaltring 158, die Kugeln 155 und die Einsenkungen in der zweiten Kupplungskomponente 154 umfasst. Diese Freilaufeinrichtung ist so gestaltet, dass sie eine Drehmomentübertragung unterbricht, wenn ein Schwellenwert der Kraft überschritten wird. Dies wird durch die Ermöglichung einer Relativrotation zwischen der ersten und der zweiten Kupplungskomponente 152, 154 erreicht.

In einem Beispiel öffnet die Sicherheitskupplung 150 in eine Verspann-Drehrichtung V zum Verspannen des Außenbundes 332 der Ventilmembran 300 ab einem ersten Drehmoment-Schwellwert, wobei die Sicherheitskupplung 150 in eine Entspann-Drehrichtung E zum Entspannen des Außenbundes 332 der Ventilmembran 300 ab einem zweiten Drehmoment-Schwellwert öffnet, wobei der zweite Drehmoment-Schwellwert größer, insbesondere wenigstens 5% größer, insbesondere wenigstens 10% größer, insbesondere wenigstens 25% größer, ist als der erste Drehmoment-Schwellwert.

Vorteilhaft kann die Ventilmembran durch die mit unterschiedlichen Drehmoment-Schwellwerten ausgebildete Sicherheitskupplung 150 sicher wieder entspannt werden und ein Zustand, in dem die Verspannung der Ventilmembran nicht mehr gelöst werden kann, wird sicher durch die so konfigurierte Sicherheitskupplung 150 verhindert.

Es ist in dem in Figur 7 gezeigten Beispiel vorgesehen, dass sich zwischen dem Drehmomentübertragungsabschnitt 112 der Schneckenwelle 110 und einem in Eingriff mit den Schneckenradzähnen 122 des Spanneinsatzes 120 stehenden Schneckenflankenabschnitt 114 der Schneckenwelle 110 eine Soll-Bruchstelle 160 angeordnet ist. Die Soll-Bruchstelle 160 ist im Beispiel durch eine im Materialverjüngung realisiert, die das über den Drehmomentübertragungsabschnitt 112 in die Schneckenwelle 110 eingebrachte Drehmoment in Richtung des Schneckenflankenabschnitt 114 weiterleitet.

Um nach einem Bruch der Soll-Bruchstelle 160 das Prozessventil weiterzuverwenden ist ein erster Abschnitt 162 der Schneckenwelle 110, welcher den Schneckenflankenabschnitt 114 umfasst, mit einer Außenkontur 164 versehen, welche drehmomentübertragend in eine Innenkontur 166 eines zweiten Abschnitts 168 eingreift. Damit wird über einen Formschluss zwischen einem Zweiflach, Sechskant oder ähnlichem die Momentübertragung von dem zweiten Abschnitt 168 auf den ersten Abschnitt 162 realisiert. Der zweite Abschnitt 168 umfasst den Drehmomentübertragungsabschnitt 112 und die Soll-Bruchstelle 160.

Figur 8 zeigt ein Beispiel einer einstückigen Schneckenwelle 110.

## Patentansprüche

1. Eine Spannbaugruppe (100) für ein Prozessventil (2), insbesondere ein Membranventil, wobei die Spannbaugruppe (100) umfasst:
ein Gehäuse (102) mit einer Schnittstelle (104a-b) zur Verbindung mit einem Ventilkörper (200);
ein sich am Gehäuse (102) abstützendes Getriebe (106), wobei das Getriebe (106) eine im Gehäuse (102) rotierbar gelagerte Schneckenwelle (110) umfasst, wobei das Getriebe (106) einen um eine Stellachse (S) rotierbar im Gehäuse (102) gelagerten Spanneinsatz (120) umfasst, dessen Schneckenradzähne (122) in Eingriff mit der Schneckenwelle (110) stehen, und wobei ein Außengewinde (124) des rotierbaren Spanneinsatzes (120) in Eingriff mit einem Innengewinde (108) des Gehäuses (102) steht, um durch die Rotation des Spanneinsatzes (120) diesen axial entlang der Stellachse (S) und relativ zu dem Gehäuse (102) zu bewegen; und
wenigstens ein am Abtrieb des Getriebes (106) angeordnetes Spannelement (130), wobei das wenigstens eine Spannelement (130) eine Anpressfläche (132) umfasst, welche zum Verspannen eines lateralen Außenbundes (332) einer Ventilmembran (300) des Prozessventils (2) zwischen dem Spannelement (130) und dem Ventilkörper (200) ausgebildet ist.

2. Die Spannbaugruppe (100) gemäß dem Anspruch 1, wobei eine zylindrische Antriebs-Befestigungshülse (140) zur starren Festlegung eines Ventilantriebs (400) zu dem Ventilkörper (200) sich von einer dem Ventilantrieb (400) zugewandten Seite der Spannbaugruppe (100) ausgehend in die Spannbaugruppe (100) hinein erstreckt, und wobei die zylindrische Antriebs-Befestigungshülse (140) eine entlang der Stellachse (S) verlaufende Durchgangsöffnung (142) zur Aufnahme der Antriebsstange (410) des Ventilantriebs (400) umfasst.

3. Die Spannbaugruppe (100) gemäß dem Anspruch 2, wobei der Spanneinsatz (120) einen Außenbund (144) der Antriebs-Befestigungshülse (140) bei einer Bewegung entlang der Stellachse (S) in Richtung des Ventilkörpers (200) mitnimmt.

4. Die Spannbaugruppe (100) gemäß Anspruch 2, wobei ein Außenbund (144) der Antriebs-Befestigungshülse (140) zumindest abschnittsweise zwischen dem Spanneinsatz (120) und dem wenigstens einen Spannelement (130) angeordnet ist.

5. Die Spannbaugruppe (100) gemäß einem der vorigen Ansprüche, wobei ein Drehmomentübertragungsabschnitt (112) der Schneckenwelle (110) von außerhalb der Spannbaugruppe (100) zugänglich ist.

6. Die Spannbaugruppe (100) gemäß dem vorigen Anspruch, wobei sich zwischen dem Drehmomentübertragungsabschnitt (112) der Schneckenwelle (110) und einem in Eingriff mit den Schneckenradzähnen (122) des Spanneinsatzes (120) stehenden Schneckenflankenabschnitt (114) der Schneckenwelle (110) eine Soll-Bruchstelle angeordnet ist.

7. Die Spannbaugruppe (100) gemäß einem der vorigen Ansprüche, wobei sich zwischen dem Drehmomentübertragungsabschnitt (112) der Schneckenwelle (110) und dem in Eingriff mit den Schneckenradzähnen (122) des Spanneinsatzes (120) stehenden Schneckenflankenabschnitt (114) der Schneckenwelle (110) eine Sicherheitskupplung angeordnet ist.

8. Die Spannbaugruppe (100) gemäß einem der vorigen Ansprüche, wobei die Schneckenwelle (110) zumindest im Eingriffsbereich mit dem Spanneinsatz (120) aus einer Metalllegierung und der Spanneinsatz (120) zumindest im Eingriffsbereich mit der Schneckenwelle (110) aus einem Kunststoff gefertigt sind, oder der Spanneinsatz (120) zumindest im Eingriffsbereich mit der Schneckenwelle (110) aus einer Metalllegierung und die Schneckenwelle (110) zumindest im Eingriffsbereich mit dem Spanneinsatz (120) aus einem Kunststoff gefertigt sind.

9. Die Spannbaugruppe (100) gemäß dem vorigen Anspruch, wobei die Schneckenradzähne (122) des Spanneinsatzes (120) aus dem Kunststoff gefertigt sind, und wobei das Außengewinde (124) des Spanneinsatzes (120) aus der Metalllegierung oder einer anderen Metalllegierung gefertigt ist.

10. Die Spannbaugruppe (100) gemäß einem der vorigen Ansprüche, wobei ein Schneckentrieb (116) umfassend den Spanneinsatz (120) und die Schneckenwelle (110) selbsthemmend ausgeführt ist.

11. Die Spannbaugruppe (100) gemäß einem der vorigen Ansprüche, wobei ein Gewindepaar, welches das Außengewinde (124) des Spanneinsatzes (120) und das eingreifende Innengewinde (108) des Gehäuses (102) umfasst, selbsthemmend ausgeführt ist.

12. Die Spannbaugruppe (100) gemäß einem der vorigen Ansprüche, wobei der Spanneinsatz (120) und die Schneckenwelle (110) dazu eingerichtet sind, eine Rotationsbewegung des Spanneinsatzes (120) aufgrund des Eingriffs mit der rotierenden Schneckenwelle (110) zu vollführen, und wobei der Spanneinsatz (120) und das Gehäuse (102) dazu eingerichtet sind, durch die Rotationsbewegung des Spanneinsatzes (120) und den Eingriff des Außengewindes (124) des Spanneinsatzes (120) in das Innengewinde (108) des Gehäuses (102) eine Axialbewegung relativ zum Gehäuse (102) entlang der Stellachse (S) zu vollführen.

13. Ein Prozessventil (2) umfassend:
einen Ventilantrieb (400);
einen Ventilkörper (200);
eine zwischen dem Ventilkörper (200) und dem Ventilantrieb (400) verspannte Ventilmembran (300); und
die Spannbaugruppe (100), insbesondere gemäß einem der vorigen Ansprüche, wobei die Spannbaugruppe (100) zwischen dem Ventilantrieb (400) und dem Ventilkörper (200) angeordnet ist.

14. Das Prozessventil (2) gemäß dem Anspruch 13, wobei eine axiale Bewegung des Spanneinsatzes (120) der Spannbaugruppe (100) in Richtung des Ventilkörpers (200) das Gehäuse (102) der Spannbaugruppe (100) und den Ventilantrieb (400) starr mit dem Ventilkörper (200) verbindet, indem der sich am Gehäuse (102) der Spannbaugruppe (100) abstützende Spanneinsatz (120) über das Gehäuse (102) und eine Verbindung des Gehäuses (102) mit dem Ventilkörper (200) eine Zugkraft auf den Ventilkörper (200) bewirkt und der sich am Gehäuse (102) abstützende Spanneinsatz (120) über das Spannelement (130) eine Druckkraft auf den Außenbund (332) der Ventilmembran (300) bewirkt.

15. Das Prozessventil (2) gemäß dem Anspruch 13, wobei eine axiale Bewegung des Spanneinsatzes (120) der Spannbaugruppe (100) in Richtung des Ventilkörpers (200) das Gehäuse (102) der Spannbaugruppe (100) und den Ventilantrieb (400) starr mit dem Ventilkörper (200) verbindet, indem der sich am Gehäuse (102) der Spannbaugruppe (100) abstützende Spanneinsatz (120) über das Gehäuse (102) und eine Verbindung des Gehäuses (102) mit dem Ventilkörper (200) eine Zugkraft auf den Ventilkörper (200) bewirkt und der sich am Gehäuse (102) abstützende Spanneinsatz (120) über das Spannelement (130) eine Druckkraft auf die starr mit dem Ventilantrieb (400) verbundene Antriebs-Befestigungshülse (140) und den Ventilkörper (200) bewirkt.
